# EUROPEAN PATENT SPECIFICATION

(11) **EP 1 581 029 B1**
(45) Date of publication and mention of the grant of the patent: **13.08.2008**
(21) Application number: 03812265.1
(22) Date of filing: 16.06.2003
(51) Int. Cl.: G05F 1/66, H05B 6/12, H02M 7/48

(54) **INDUCTION HEATING COOKING APPLIANCE**
INDUKTIONSERWÄRMUNGS-KOCHGERÄT
APPAREIL DE CUISSON A CHAUFFAGE PAR INDUCTION

(30) Priority: 02.12.2002 JP 2002350011
(43) Date of publication of application: 28.09.2005
(73) Proprietor: KABUSHIKI KAISHA TOSHIBA, Tokyo (JP); Toshiba Ha Products Co., Ltd., Ibaraki, Osaka (JP); Toshiba Consumer Marketing Corporation, Tokyo (JP)
(72) Inventor: HAYASHI, Hidetake, I P D Toshiba Corporation, Minato-ku, Tokyo 105-8001 (JP); TANAKA, Teruya, I P D Toshiba Corporation, Minato-ku, Tokyo 105-8001 (JP); TAKIMOTO, Hitoshi, I P D Toshiba Corporation, Minato-ku, Tokyo 105-8001 (JP); MARUTANI, Yuki, I P D Toshiba Corporation, Minato-ku, Tokyo 105-8001 (JP)
(74) Representative: O'Connell, David Christopher
(86) International application number: PCT/JP2003/007632
(87) International publication number: WO 2004/052056

(56) References cited:
- JP-A- 4 208 076
- JP-A- 5 109 466
- JP-A- 7 065 943
- JP-A- 10 106 738
- JP-A- 2000 100 550
- JP-A- 2002 260 835
- JP-B2- 2 856 788
- US-A1- 2002 117 497

## Description

### TECHNICAL FIELD

This invention relates to an induction heating cooker comprising an inverter circuit generating a high frequency current on the basis of a commercial AC power supply and heating an object to be cooked by supplying the high frequency current to a heating unit.

### BACKGROUND ART

For example, induction heating cookers of the variable frequency type control an inverter on the basis of a phase difference between output voltage and output current of the inverter circuit. This control manner is advantageous in that a heating output can be varied smoothly from a low level to a high level. Japanese Patent No. 2856788 discloses one of such cookers of the type as described above. In the disclosed cooker, output voltage phase and output current phase are compared with each other and a feedback control is carried out so that the phase difference takes a constant value according to input current setting. In this case, a signal on the basis of the phase difference is supplied to a voltage control oscillator (VCO) and IGBT's composing the inverter circuit are turned on and off alternately by oscillation signals generated by the voltage control oscillator.

Furthermore, JP-A-2002-260835 discloses a technique for control of an inverter circuit on the basis of a fixed frequency but not on the basis of variable frequency, using a digital signal processor (DSP) incorporating a PWM control function for three-phase motor drive.

The technique disclosed in the above-noted Japanese Patent No. 2856788 employs the voltage control oscillator. However, since IC incorporating the voltage control oscillator is composed into an analog circuit, the IC is easy to be adversely affected by the switching noise. Furthermore, since the aforesaid IC has become expensive, it is difficult to employ the IC. Furthermore, analog signals are sampled by a circuit with a large time constant when the output voltage or output current is detected. As a result, it is difficult to detect an instantaneous variation and accordingly, a control response is delayed.

Furthermore, when the variable frequency control is carried out using a voltage control oscillator arranged into an analog IC, the following problems arise. More specifically, when a switching frequency of the inverter circuit is increased from a high frequency to a low frequency, a load changes froman inductive one to a capacitive one. When the frequency is away from a resonance point to a large degree, the switching of the inverter circuit is carried out in a period when the voltage amplitude is large. Consequently, since the switching loss is increased, there is a possibility that the switching elements may be broken. A lower limit of the switching frequency needs to be set strictly in order that the above-noted drawback may be avoided. However, the analog IC is easy to be affected by noise. When the inverter circuit is subjected to noise when the frequency has reached the vicinity of the lower limit, the frequency is supposed to exceed the lower limit.

The above-mentioned publication, JP-A-2002-260835, uses DSP incorporating the PWM function for three-phase motor drive for the purpose of providing an inexpensive high-performance inverter circuit. However, the inverter employs a fixed frequency control system in the publication.

The present invention was made in view of the foregoing and an object of the invention is to provide an induction heating cooker in which the control arrangement is inexpensive and high-performance when a variable frequency control manner is carried out.

### DISCLOSURE OF THE INVENTION

The present invention provides an induction heating cooker including an inverter circuit generating a high frequency current on the basis of a commercial AC power supply and heating an object to be cooked by supplying the high frequency current to a heating unit, characterized by an inverter output control circuit controlling an output of the induction heating cooker in a variable frequency manner, the inverter output control circuit comprising a microcomputer including a reduced instruction set computer (RISC) or a digital signal processor (DSP)and in that the inverter output control circuit controls the inverter circuit on the basis of a phase difference between an output voltage and an output current and evaluates the phase difference at a mean of values detected during a half of a commercial AC power supply period.

The microcomputer including RISC or DSP performs a high-speed operation and accordingly, can deliver a high-speed control signal to control the inverter circuit, instead of the voltage control oscillator. Furthermore, the microcomputer including RISC or the like can capture instantaneous changes in the input signal since it also performs a high-speed A/D conversion. Accordingly, the RISC or the like can perform a reliable control even when the control period is short and consequently, a response speed can be improved. Additionally, since the control of the oscillation signal output can be digitized, the anti-noise characteristic can be improved and the switching loss of the inverter circuit can be prevented from being easily increased in a low frequency range. Further, even when the detection accuracy differs depending upon levels of input signals in an arrangement for controlling variable frequency according to the phase difference, a mean value can be obtained from the phase differences, whereby the phase differences are evaluated.

In an embodiment of the invention, the inverter output control circuit prohibits the detection of the phase difference between the output voltage and output current of the inverter circuit, in the neighborhood of the zero-cross point of the commercial AC power waveform. Consequently, data can be prevented from being sampled during deterioration in the detecting accuracy.

In another embodiment of the invention, the inverter output control circuit varies a carrier wave frequency of the PWM control in the neighborhood of a zero-cross point of the commercial AC power supply waveform. In this arrangement, sudden changes in an input current to the inverter circuit can be restrained when the carrier wave frequency of the PWM control is changed according to changes in input setting in a period when the current level is low.

In further another embodiment of the invention, the inverter output control circuit sets a timing for varying the carrier wave frequency for a half of a commercial AC power supply period or a multiple of the half period. Consequently, switching in the control can be carried out at shorter intervals.

### BRIEF DESCRIPTION OF THE DRAWINGS

FIG. 1 is a block diagram showing an electrical arrangement of the induction heating cooker of an embodiment in accordance with the present invention;
FIG. 2 is a flowchart showing a processing program to deliver PWM signals while the control circuit is realizing the function corresponding to VCO;
FIGS. 3A to 3C are timing charts corresponding to the processing as shown in FIG. 2;
FIG. 4 is a flowchart showing a detection processing routine carried out by the control circuit;
FIGS. 5A and 5B show waveforms corresponding to input current and output current of the inverter circuit and period flags delivered in every half of the commercial power supply period;
FIGS. 6A to 6C are timing charts showing phase difference detection;
FIGS. 7A and 7B are views similar to FIGS. 5A and 5B, showing a second embodiment of the present invention; and
FIGS. 8A and 8B are waveform charts showing detection of abnormal input voltage in step A3 in FIG. 4 more concretely.

### BEST MODE FOR CARRYING OUT THE INVENTION

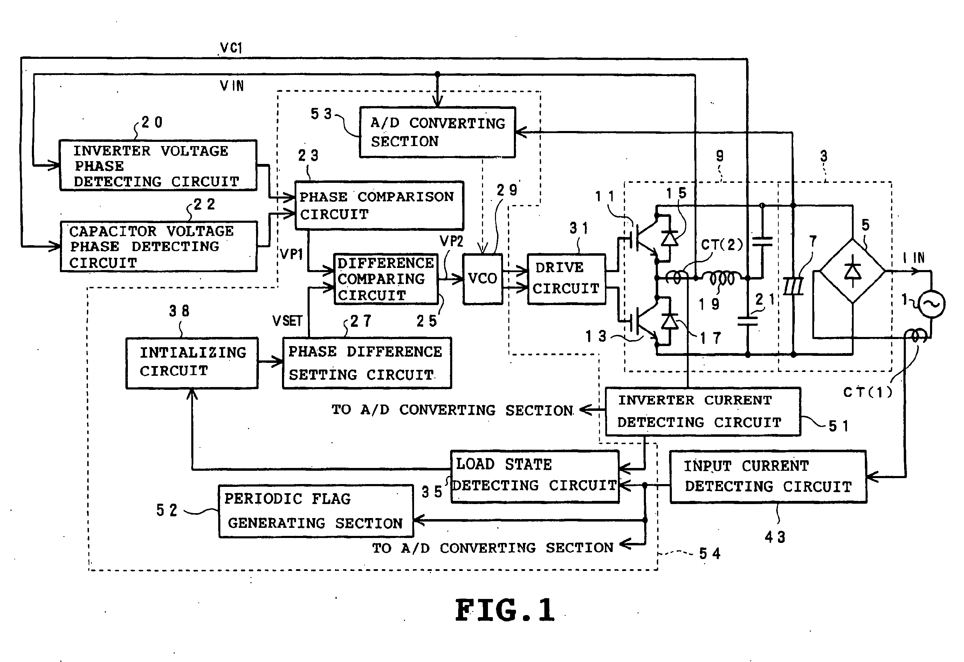

An embodiment of the present invention will be described with reference to FIGS. 1 to FIG. 6C. Referring to FIG. 1, an electrical arrangement of the induction heating cooker of the embodiment, an AC power supply 1 is connected to a DC power supply circuit 3. The DC power supply circuit comprises a bridge circuit 5 rectifying the DC power supply and a capacitor 7 smoothing the rectified pulsating current.

A half bridge inverter circuit 9 comprises two IGBT's (switching elements) 11 and 13, diodes 15 and 17 connected between collectors and emitters of the IGBT's respectively, a series resonance circuit connected between an output terminal of the inverter circuit 9 and ground or a heating coil (a heating unit) 19 and a resonance capacitor 21.

An inverter voltage phase detecting circuit 20 detects an inverter voltage V_{IN} as a first signal and delivers the detected voltage V_{IN} to a phase comparison circuit 23. Furthermore, a capacitor voltage phase detecting circuit 22 detects an inverter current flowing through the capacitor 21 and a voltage V_{c1} across both ends of the capacitor 21, which voltage serves as a second signal having a phase correlation with the inverter current flowing through the capacitor 21. The detected voltage V_{c1} is delivered to the phase comparison circuit 23.

The phase comparison circuit 23 compares phases of the input first and second signals with each other, delivering, to a difference comparison circuit 25, a signal V_{P1} concerning a phase difference between both signals. A phase difference setting circuit 27 sets a phase difference V_{SET} between the first and second signals. Input power is adjusted according to the set phase difference V_{SET}.

The difference comparison circuit 25 compares the phase difference signal V_{P1} delivered by the phase comparison circuit 23 and the phase difference signal V_{SET}, thereby delivering the comparison result V_{P2} to a voltage control oscillator 29 (hereinafter, "VCO"). More specifically, V_{P2}=H is delivered when V_{P1}>V_{SET} whereas V_{P2}=L is delivered when V_{P1}≤ V_{SET}· VCO (a frequency control unit) 29 changes an oscillation frequency according to an output signal of the difference comparison circuit 25, thereby controlling an oscillation frequency of the inverter circuit 9 so that the oscillation frequency becomes equal to the phase difference set by the phase difference setting circuit 27.

VCO 29 is arranged to digitally simulate a circuit operation as will be described in detail later, and changes the oscillation frequency according to the result of comparison supplied by the difference comparison circuit 25, although VCO as a general analog circuit changes an oscillation frequency according to input voltage.

A drive circuit 31 turns on and off IGBT' s 11 and 13 alternately on the basis of a signal delivered by VCO 29. When IGBT's 11 and 13 are turned on and off alternately, the heating coil 19 and the capacitor 21 are set in series resonance, whereby the heating coil 19 generates high-frequency power to carry out induction heating for an object to be heated, such as a pot, which is placed on a top plate (not shown).

An initializing circuit 33 serves as initializing unit for initializing the phase difference between the first signal having phase correlation with the output voltage of the inverter circuit 9 and the second signal having phase correlation with the current flowing through the resonance capacitor 21. When power is connected to the cooker, the initializing circuit 33 delivers an initial signal to the phase difference setting circuit 27. When supplied with the initial signal from the initializing circuit 33, the phase difference setting circuit 27 sets the phase difference between the first and second signals as a reference phase difference, for example, 120°C. Consequently, for example, when a steel pot is the heated object placed on the top plate, the input power is set for 100 W.

A current transformer CT(1) detects power supply current I_{IN} supplied from the AC power supply 1 and delivers to an input current detecting circuit 43 a signal corresponding to the detected power supply current I_{IN}. The input current detecting circuit 43 detects the power supply current, namely, the input current I_{IN}, based on the detection signal from the current transformer CT(1).

A loaded condition detecting circuit 35 detects properness of load placed on the top plate, based on the information supplied from the input current detecting circuit 43. A fundamental operation of the hitherto described arrangement is similar to that disclosed by Japanese Patent No. 2856788. The difference comparison circuit 25 corresponds to a low-pass filter (LPF) in the above-noted Japanese patent. The low-pass filter executes analog processing for the comparison of phase difference signals, whereas the difference comparison circuit executes digital processing for that purpose. However, the low-pass filter and the difference comparison circuit have substantially the same function.

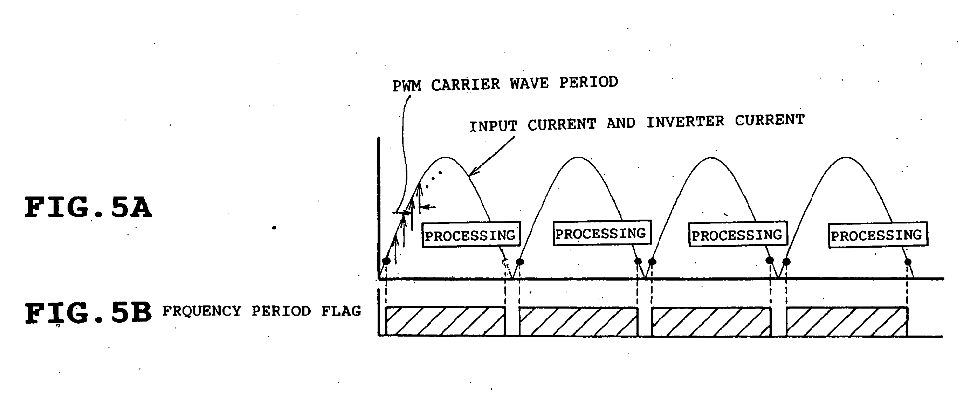

A current transformer CT (2) is interposed between the emitter of IGBT 11 and the heating coil 19. An output signal of the current transformer CT (2) is supplied via an inverter current detecting circuit 51 to the loaded condition detecting circuit 35. A period flag generating section 52 generates a period flag (see FIG. 5B) every one half period of the AC power supply, based on the input current I_{IN} detected by the input current detecting circuit 43. The period flag is indicative of a predetermined period.

Additionally, the A/D converter section 53 has an input port connected to a positive output terminal of the bridge circuit 5, an output terminal of the inverter circuit 9 and an output terminal of the input current detecting circuit 43. The A/D converter section 53 multiplexes the input current, output voltage and output current of the inverter circuit 9, carrying out A/D conversion. A voltage dividing resistor (not shown) may be provided for the detection of output voltage of the inverter circuit 9, if necessary.

A control circuit (an inverter output control circuit) 54 comprises the phase comparison circuit 23, difference comparison circuit 25, VCO 29, loaded condition detecting circuit 35, initializing circuit 33, phase difference setting circuit 27 and A/D converter section 53. The control circuit 54 further comprises a microcomputer including RISC and having a CPU core of RISC architecture. CPU of the RISC architecture has the following characteristics of all the decoding realized by wired logic, a simple set of orders which can be executed in the same period of time, pipe-line control for order execution processing; a large number of inner registers, and a large capacity of cache.

In order that programs may efficiently be executed by the aforesaid architecture, a program of execute form is optimized by a compiler. The microcomputer including RISC thus arranged has a higher total processing performance than complex instruction set computer (CISC) type microcomputers. The microcomputer including RISC has particularly high execution speeds for product operation or the like. For example, an execution speed for at least one order is not more than 1 µsec. in the control circuit 54 of the embodiment.

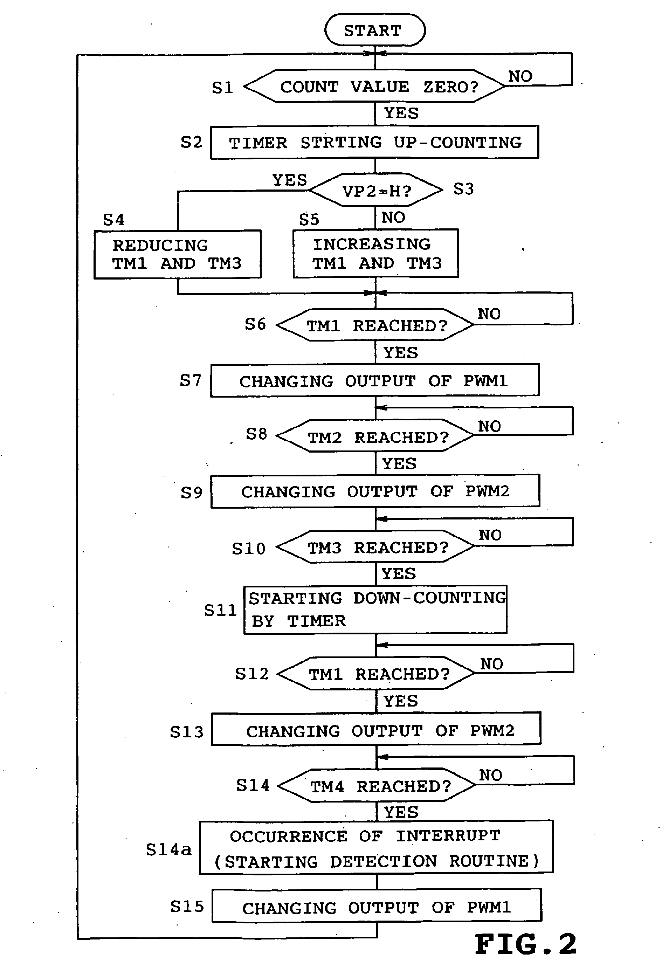

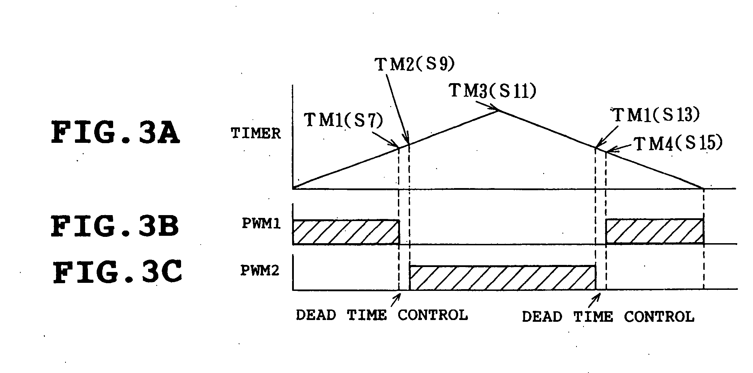

FIG. 2 is a flowchart of processing program on which the control circuit 54 realizes the function of VCO 29 to deliver PWM signals 1 and 2. FIGS. 3A to 3C are timing charts corresponding to the processing. In an initial state, PWM signal 1=H and PWM signal 2=L. Set values TM1 and TM3 are set for suitable initial values. When the count of a carrier wave generating timer is 0 (YES at step S1), the control circuit 54 controls the timer so that an up-counting operation is initiated (step S2). The set values TM1 to TM3 are set according to the comparison result V_{P2} supplied from the difference comparison circuit 25 (steps S3 to S5). More specifically, when V_{P2}=H (YES at step S3), the set values TM1 and TM3 are decreased so that the frequency is increased (step S4). When V_{P2}=L (NO at step S3), the set values TM1 and TM3 are increased so that the frequency is reduced (step S5).

The control circuit 54 is on standby until the timer count reaches the set value TM1 (step S6). When the set value TM1 has been reached (YES), the PWM signal 1 is switched to the low level (step S7). That is, the PWM signal 1 is at the high level from start to this time, so that the upper arm IGBT 11 of the inverter circuit 9 is turned on for this period.

The control circuit 54 is on standby until the timer count reaches the set value TM2 (step S8). When the set value TM2 has been reached (YES), the PWM signal 2 is switched to the high level (step S9). That is, the PWM signals 1 and 2 are both at the low level in the period between step S7 and step S9, so that the upper and lower arm IGBT' s 11 and 13 of the inverter circuit 9 are turned off (a dead time). When the dead time is set, for example, for 1 µsec., the set value TM2 becomes equal to the set value TM1 added with the count corresponding to 1 µsec.

The control circuit 54 is then on standby until the timer count reaches the set value TM3 (step S10). When the set value TM3 has been reached (YES), the timer of the PWM signal 2 is switched to the down-counting operation (step S11). The control circuit 54 is further on standby until the timer count reaches the set value TM1 (step S12). When the set value TM1 has been reached (YES), the PWM signal 2 is switched to the low level (step S13). That is, the PWM signal 1 is at the low level and the PWM signal 2 is at the high level, so that the upper arm IGBT 11 of the inverter circuit 9 is turned off and the lower arm IGBT 13 is turned on.

The control circuit 54 is further on standby until the timer count reaches the set value TM4 (step S14). When the set value TM4 has been reached (YES), the control circuit causes interrupt to start up a detection routine for carrying out various measurements and detection (step S14a) and switches PWM signal 1 to the high level (step S15). That is, both PWM signals 1 and 2 are at the low level in a period between step S13 and step S15, so that the upper and lower IGBT' s 11 and 13 of the inverter circuit 9 are turned off (a dead time). Accordingly, the set value TM4 becomes equal to the set value TM1 from which the count corresponding to 1 µsec. is subtracted (NO).

The control circuit 54 returns to step S1 after execution of step S15. Since the PWM signal 1 is at the high level in the period between steps S15 and S7, the upper arm IGBT 11 of the inverter circuit 9 is turned on and the lower arm IGBT 13 is turned off in this period.

In the above-described processing, a carrier wave frequency of PWM control is variable in a range from 20 kHz to 100 kHz. In consideration of dead time insertion, the timer requires a resolution (count period) not less than 0.1 µsec.

Furthermore, when the phase difference detection is carried out in synchronization with the carrier wave period, a time needs to be measured from the time the upper arm IGBT is turned on by the PWM signal to a zero-cross point of the output current of the inverter circuit 9. In this case, too, the carrier wave period is 10 µsec. when the carrier wave frequency is at 100 kHz. Accordingly, the phase difference measurement also requires 0.1 µsec.

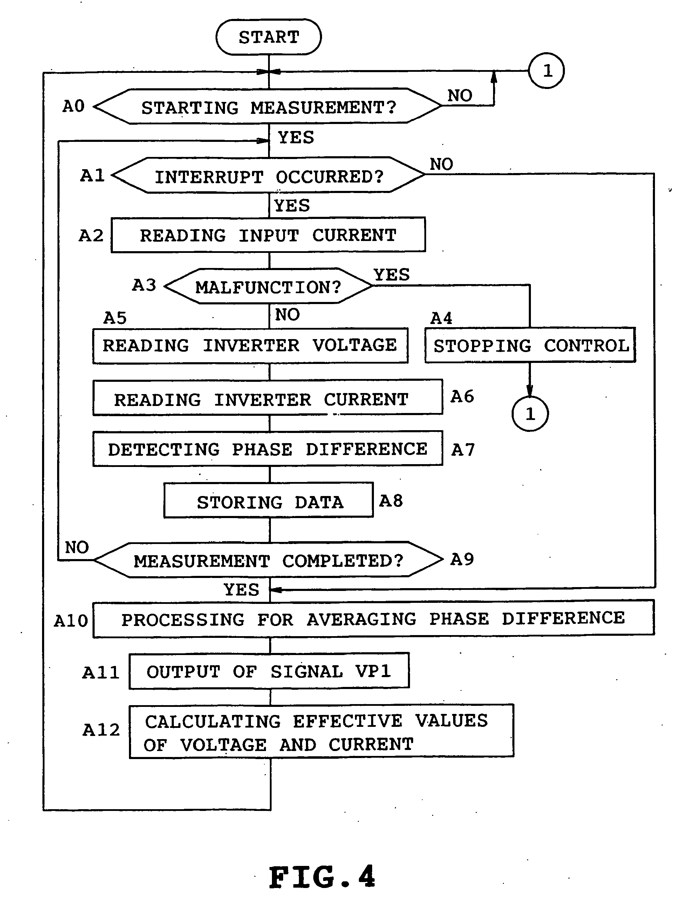

FIG. 4 is a flowchart showing a detection processing routine carried out by the control circuit 54. FIGS. 5A and 5B are timing charts in relation to the detection in FIG. 4. In this routine, the control circuit 54 is on standby until the timing of measurement start (step A0). The measurement start timing is given by a period flag as shown in FIG. 5B. The period flag is generated by the period flag generating section 52 as described above and is indicative of a predetermined period excluding the neighborhood of the zero-cross point of the current, the period being established in every half of the commercial power supply period.

The control circuit 54 is on standby for occurrence of interrupt (stepA1) when recognizing occurrence of the measurement start timing on the basis of rise of the period flag (YES at step A0). The interrupt is an internal interrupt caused at step S14a in FIG. 2 and is generated every PWM carrier wave period. The control circuit 54 controls the A/D converter section 53 so that the input voltage is referred to (step A2), upon occurrence of the interrupt (YES).

In the case where the referred input current shows a sudden increase or sudden drop relative to the previous value (YES a step A3), occurrence of lightening surge or power stoppage in the commercial AC power supply is supposed. Accordingly, the control circuit 54 delivers a stop signal to VCO 29 to interrupt control of the inverter circuit 9 (step A4), thereafter returning to step A0. On the other hand, when the referred input voltage has varied in the normally assumed range relative to the previous value (NO at step A3), the control circuit 54 advances to step A5.

The control circuit 54 refers to the output voltage and output current at steps A5 and A6 respectively. The PWM carrier wave is actually superposed on a waveform in the case where an A/D conversion is carried out for the purpose of referring to each of the output voltage and current. Since the control circuit 54 carries out the detection on the basis of the PWM control period, the waveform on which the carrier wave is superposed can be used.

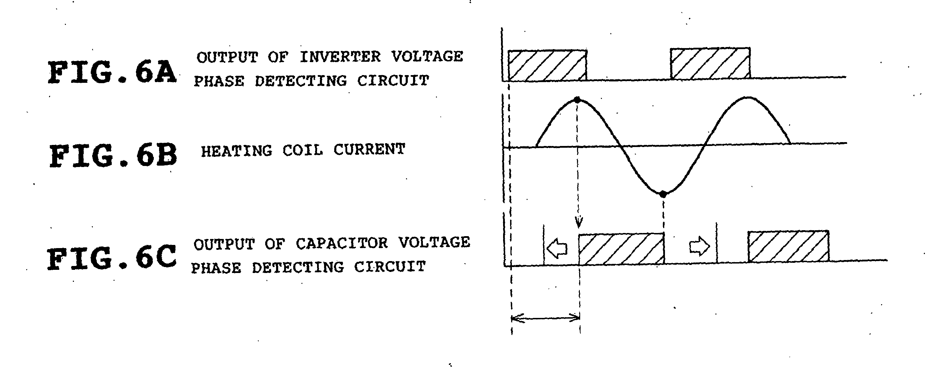

The control circuit 54 then detects a phase difference between the output voltage and output current (step A7). FIGS. 6A to 6C are timing charts showing phase difference detection. In the phase difference detection, firstly, a time from rise of an output signal of the inverter output voltage phase detecting circuit 20 (FIG. 6A) to rise of an output signal of the capacitor output voltage phase detecting circuit 22 (FIG. 6C). However, since the output signal of the circuit 20 lags by 90 degrees behind the current (FIG. 6B) flowing in the heating coil 19, the lag is subtracted later. More specifically, since the output signal of the detecting circuit 22 has a pulse width corresponding to a phase of 180°, a half of the pulse width is subtracted.

When reference and detection are carried out at step A5 to A7, the control circuit 54 stores the data in a memory (step A8), thereafter determining whether timing for measurement completion has been reached (step S9). The timing for measurement completion is a trailing edge of the period flag as shown in FIG. 5B. The control circuit 54 returns to step A1 when the timing for measurement completion has not been reached (NO). The control circuit 54 advances to step A10 when the timing for measurement completion has been reached (YES).

The processing for averaging the phase difference is carried out at step A10. More specifically, a mean value is obtained from a plurality of phase difference data measured in the period when the period flag is set in a half of the commercial AC power supply period. The obtained mean value is delivered as a signal V_{P1} to the difference comparison circuit 25 (step A11) and compared with a set signal V_{SET}. The control circuit 54 then calculates effective values of the output voltage and output current of the inverter circuit 9 obtained at steps A5 and A6. As well known, an effective value is obtained as a square root of root mean square values calculated with respect to n number of data, data_1, data_2, ... data_n. These values are used in the heating control. When the effective value has been obtained, the control circuit 54 returns to step A0.

FIG. 4 shows the detection for a half of the commercial AC power supply period. However, regarding the effective value calculated at step A12, a mean value of a plurality of periods is further obtained and evaluated. Furthermore, as shown in FIGS. 5A and 5B, the control circuit 54 detects the voltage and current with a half of the commercial AC power supply period serving as a unit. Accordingly, the PWM control period is adapted to be changed in the neighborhood of the zero point when the input current setting has been changed by the user' s operation. That is, the changes in the carrier wave frequency takes place in a period when the power supply level is low.

As described above, the control circuit 54 comprises the microcomputer including RISC in the foregoing embodiment. Based on the phase difference between the output voltage and output current of the inverter circuit 9 of the induction heating cooker, the IGBT's 11 and 13 of the inverter circuit 19 are controlled in the PWM control manner with the variable frequency. More specifically, since the microcomputer including RISC performs very high-speed operation, the inverter circuit 9 can be controlled by delivering high-speed PWM signals, instead of the conventional VCO comprising analog IC. Furthermore, since the A/D conversion in the A/D conversion section 53 is carried out at high speeds, instantaneous changes in the input signal can be captured. Consequently, the phase difference can be detected reliably even when the control period is short, and accordingly, the response speed can be improved.

Furthermore, since the variable frequency control covers a wide range from 20 kHz to 100 kHz as exemplified above, a high-speed processing is required when phase difference is detected in a high frequency region. Accordingly, the control circuit 54 comprising the microcomputer including RISC or DSP is effective. Additionally, a microcomputer including RISC or the like has a capturing function of latching a count of a free-run counter, for example, at every trailing edge of a trigger signal, thereby measuring a time on the basis of difference between latched counts. The phase difference can easily be detected by using the aforesaid capturing function. Furthermore, since the control circuit 54 carries out the digital control for output of the oscillation signal by VOC 29, the antinoise property can be improved and the switching loss in IGBT' s 11 and 13 of the inverter circuit 9 can easily be prevented from being increased in a low frequency region.

The control circuit 54 refers to the input current and output current of the inverter circuit 9 according to the carrier wave period of the PWM control. Accordingly, since the input signal waveform need not be filtered by the circuit with a large time constant at a stage prior to sampling, the response speed can further be improved. Furthermore, since the control circuit 54 computes the effective value of the current data, the current data need not be averaged by a circuit with a large time constant and then referred to. Consequently, the response speed can be improved. Furthermore, since the carrier wave frequency of the PWM control is varied in the neighborhood of the zero-cross point of the commercial AC power supply waveform, a sudden change in the input current relative to the inverter circuit 9 can be limited and switching in the control can be carried out in a shorter interval.

The control circuit 54 evaluates the phase difference between the output voltage and output current of the inverter circuit 9 on the basis of a mean of the values detected in a half of the commercial AC power supply period. Consequently, even when the detection accuracy differs depending upon the input signal level, the detected values are averaged and the phase difference can be evaluated on the basis of the mean value. Furthermore, the phase difference detection is prohibited in the neighborhood of the zero-cross point of the commercial AC power supply waveform. Consequently, data sampling can be avoided in the period when the detection accuracy is deteriorated.

Additionally, the control circuit 54 interrupts the control of the inverter circuit 9 when detecting the commercial AC power supply voltage and determining that an increase rate takes an abnormal value. Consequently, for example, upon occurrence of power stoppage or application of lightening surge to the power supply line, the occurrence is detected and consequently, the inverter circuit can be protected.

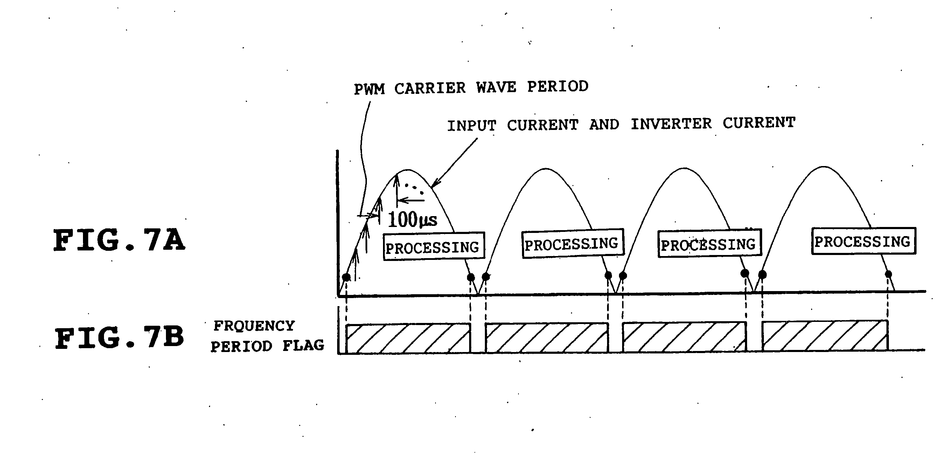

FIGS. 7A to 8B illustrates another embodiment of the invention. Identical parts in the second embodiment are labeled by the same reference numerals as those in the first embodiment and description of these identical parts will be eliminated. Only the differences will be described. In the second embodiment, an integrating circuit (not shown) is provided for the signal detected by a current sensor CT regarding the input current and inverter output current, so that a PWM carrier wave frequency component is eliminated from the signal, whereby the signal has a waveform with an envelope of the 50 or 60 Hz commercial AC power supply waveform. That is, the signal has a waveform substantially as shown in FIG. 7A.

A detection period for voltage, current or the like is determined depending upon an interrupt signal generated every 100 µsec. More specifically, the period in which the positive determination is made at step A1 in the flowchart of FIG. 4 is 100 µsec.

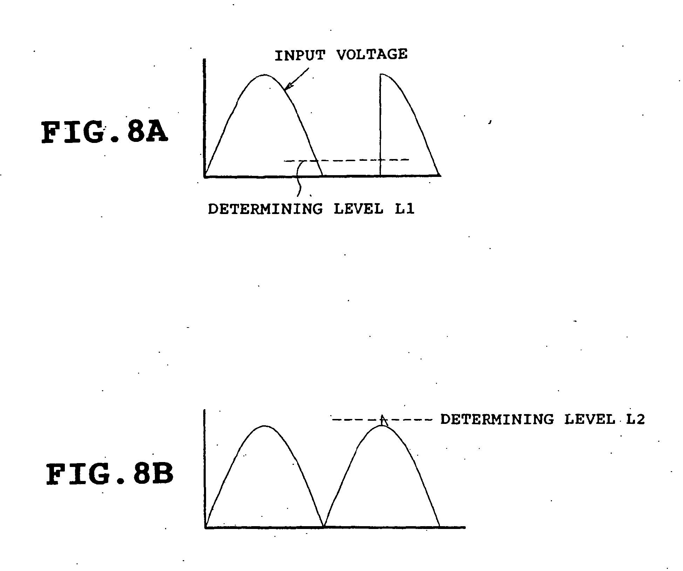

FIGS. 8A and 8B show detection of abnormal input voltage in step A3 more concretely. FIG. 8A relates to the case of detection of power stoppage. An abnormality determining level is set for L1 in the neighborhood of 0 V. When detecting the voltage lower the determining level L1 continuously twice, the control circuit 54 interrupts oscillation by VCO 29. In this case, since a period of power stoppage is very short or an instantaneous stoppage occurs, the oscillation is re-started upon lapse of, for example, 3 seconds after interrupt of oscillation by VCO 29.

The determining level L1 is set in the following manner. For example, the power supply half period is about 8.3 msec. when the power supply frequency is 60 Hz. The detection period of 100 µses. corresponds to a phase of about 2.17 degrees. Accordingly, the determining level is set for a value corresponding to the amplitude within a phase of 1.08 degrees from zero point of current.

FIG. 8B shows the case where lightening surge has been applied. The abnormality determining level is set for L2 which is higher than the maximum amplitude value. When detecting the voltage higher the determining level L2 continuously twice, the control circuit 54 interrupts oscillation by VCO 29. In this case, too, the oscillation is re-started upon lapse of, for example, 3 seconds after interrupt of oscillation by VCO 29.

In the second embodiment as arranged above, the waveforms of input current and output current of the inverter circuit 9 referred to by the control circuit 54 are envelopes of a commercial AC power supply period. Since a sampling rate is reduced to a certain degree in this arrangement, a sufficient time can be afforded to the treatment.

The present invention should not be limited to the embodiments described above with reference to the drawings but may be modified or expanded as follows.

DSP and CISC microcomputer may be used instead of the microcomputer including RISC.

The timing for varying the carrier wave frequency should not be limited to a half of the commercial AC power supply period but may be a multiple of the half period.

The variable frequency control may be executed by changing the frequency stepwise according to an input power.

The concept of phase difference in the present invention includes a time difference between reference phases in two signal waveforms.

### INDUSTRIAL APPLICABILITY

As described above, according to the induction heating cooker of the present invention, the inverter circuit is digitally controlled so that the frequency is varied, whereupon the control response speed is improved and the noise resistance is improved. Consequently, the switching loss of the inverter circuit can be prevented from being increased in the low frequency range.

## Claims

1. An induction heating cooker including an inverter circuit (9) generating a high frequency current on the basis of a commercial AC power supply (1) and heating an object to be cooked by supplying the high frequency current to a heating unit (19), **characterized by** an inverter output control circuit (54) controlling an output of the induction heating cooker in a variable frequency manner; the inverter output control circuit (54) comprising a microcomputer including a reduced instruction set computer (RISC) or a digital signal processor (DSP) and in that the inverter output control circuit (54) controls the inverter circuit (9) on the basis of a phase difference between an output voltage and an output current and evaluates the phase difference at a mean of the values detected during a half of a commercial AC power supply period.

2. The induction heating cooker according to claim 1, **characterized in that** the inverter output control circuit (54) prohibits the detection of the phase difference between the output voltage and output current of the inverter circuit (9), in the neighborhood of the zero-cross point of the commercial AC power waveform.

3. The induction heating cooker according to claim 1, **characterized in that** the inverter output control circuit (54) varies a carrier wave frequency of the PWM control in the neighborhood of a zero-cross point of the commercial AC power supply waveform.

4. The induction heating cooker according to claim 3, **characterized in that** the inverter output control circuit (54) sets a timing for varying the carrier wave frequency for a half of a commercial AC power supply period or a multiple of the half period.

## Patentansprüche

1. Induktionsheizungsherd enthaltend einen Wechselrichterkreis (9), der einen Hochfrequenzstrom auf der Grundlage einer kommerziellen Wechselstrom Leistungsquelle (1) erzeugt und ein zu kochendes Objekt durch Zuleiten des Hochfrequenzstroms zu einer Heizungseinheit (19) erhitzt, **gekennzeichnet durch** einen Wechselrichterausgabe-Steuerungskreis (54), der eine Ausgabe des Induktionsheizungsherds **durch** Variieren der Frequenz steuert; wobei der Wechselrichterausgabe-Steuerungskreis (54) einen Mikrocomputer enthaltend einen Reduzierte-Befehlssatz-Computer (RISC) oder einen Digitalsignalverarbeiter (DSP) umfasst, und **dadurch**, dass der Wechselrichterausgabe-Steuerungskreis (54) den Wechselrichterkreis (9) auf der Grundlage einer Phasendifferenz zwischen einer Ausgabespannung und einem Ausgabestrom steuert und die Phasendifferenz bei einem Mittel der Werte, die während einer Hälfte einer Periode einer kommerziellen Wechselstromleistungsquelle gemessen werden, bewertet.

2. Induktionsheizungsherd nach Anspruch 1, **dadurch gekennzeichnet, dass** der Wechselrichterausgabe-Steuerungskreis (54) das Erkennen der Phasendifferenz zwischen der Ausgangsspannung und dem Ausgangsstrom des Wechselrichterkreises (9) in der Umgebung des Nulldurchgangspunkts der kommerziellen Wechselstromleistungs-Wellenform verhindert.

3. Induktionsheizungsherd nach Anspruch 1, **dadurch gekennzeichnet, dass** der Wechselrichterausgabe-Steuerungskreis eine Trägerwellenfrequenz der PWM (Pulsweitenmodulations-) Steuerung in der Umgebung des Nulldurchgangspunkts der kommerziellen Wechselstromleistungsquellen-Wellenform verändert.

4. Induktionsheizungsherd nach Anspruch 3, **dadurch gekennzeichnet, dass** der Wechselrichterausgabe-Steuerungskreis (54) einen Zeitpunkt zum Verändern der Trägerwellenfrequenz für eine Hälfte einer Periode einer kommerziellen Wechselstromleistungsquelle oder ein Vielfaches der halben Periode festlegt.

## Revendications

1. Cuisinière à chauffage à induction comprenant un circuit inverseur (9) générant un courant à haute fréquence sur la base d'une alimentation électrique CA commerciale (1) et chauffant un objet destiné à être cuit en fournissant le courant à haute fréquence à une unité de chauffage (19), **caractérisée par** un circuit de contrôle de sortie d'inverseur (54) contrôlant une sortie de la cuisinière à chauffage à induction d'une manière à fréquence variable ; le circuit de contrôle de sortie d'inverseur (54) comprenant un micro-ordinateur comprenant un ordinateur à jeu d'instructions réduit (RISC) ou un processeur de signal numérique (DSP) et en ce que le circuit de contrôle de sortie d'inverseur (54) contrôle le circuit inverseur (9) sur la base d'une différence de phase entre une tension de sortie et un courant de sortie et évalue la différence de phase à une moyenne des valeurs détectées pendant une moitié d'une période d'alimentation électrique CA commerciale.

2. Cuisinière à chauffage à induction selon la revendication 1, **caractérisée en ce que** le circuit de contrôle de sortie d'inverseur (54) interdit la détection de la différence de phase entre la tension de sortie et le courant de sortie du circuit inverseur (9), à proximité du point de passage à zéro de la forme d'onde de l'alimentation électrique CA commerciale.

3. Cuisinière à chauffage à induction selon la revendication 1, **caractérisée en ce que** le circuit de contrôle de sortie d'inverseur (54) fait varier une fréquence d'onde porteuse du contrôle de PWM à proximité d'un point de passage à zéro de la forme d'onde de l'alimentation électrique CA commerciale.

4. Cuisinière à chauffage à induction selon la revendication 3, **caractérisée en ce que** le circuit de contrôle de sortie d'inverseur (54) définit un moment pour faire varier la fréquence d'onde porteuse pour une moitié d'une période d'alimentation électrique CA commerciale ou un multiple de la demi-période.
